# EUROPEAN PATENT SPECIFICATION

(11) **EP 3 219 980 B1**
(45) Date of publication and mention of the grant of the patent: **02.01.2019**
(21) Application number: 16160693.4
(22) Date of filing: 16.03.2016
(51) Int. Cl.: F03D 1/06, F03D 7/02

(54) **TRAILING EDGE AIR DUCT OF A WIND TURBINE ROTOR BLADE**
HINTERKANTENLUFTKANAL EINER WINDTURBINENROTORSCHAUFEL
CONDUIT D'AIR DE BORD DE FUITE D'UNE PALE DE ROTOR D'ÉOLIENNE

(43) Date of publication of application: 20.09.2017
(73) Proprietor: Siemens Aktiengesellschaft, 80333 München (DE)
(72) Inventor: Gertz, Drew Patrick, 2200, København N (DK); Standish, Kevin J., Erie, 80516 (US)

(56) References cited:
- EP-A2- 2 341 245
- WO-A2-2011/157849
- WO-A2-2014/064626
- US-A1- 2015 050 154

## Description

The present invention relates to a rotor blade of a wind turbine with an air duct. In particular, the invention relates to a way of reducing the maximum lift coefficient, hence the maximum load, of the rotor blade.

In general, it is desirable to reduce the wind load on a wind turbine as much as possible. A rotor blade of a wind turbine is one example for a component of the wind turbine, which is typically heavily loaded by forces which are applied by the incoming wind flow. Therefore, it would be advantageous to reduce these loads on the rotor blades.

In the post-rated regime, for instance, which is a regime with wind speeds above typically ten to fifteen meter per second, specific spanwise regions of the rotor blade or even the entire rotor blade experience overly high lift. As the lift of a section of the rotor blade correlates with the loading of this section, an overly high lift implies a significant and, in general undesired, high load of these sections.

Currently, this problem of an overly high load is solved by curtailing the power of the wind turbine in order to reduce the load on the rotor blade and other connected structural parts of the wind turbine. A drawback of this strategy is, however, that also the generated power of the wind turbine is reduced.

Another approach of solving the issue of a too high load of the rotor blade is the provision of a flap or a similar aerodynamic device on specific sections of the rotor blade. Such aerodynamic devices have been proposed in many different configurations and based on many different mechanisms. However, all existing flap systems have in common that they have to be actuated actively or passively.

In the first alternative, namely the actively actuated flap, a mechanical, hydraulic, pneumatic, or electrical actuator is activating the flap - or the aerodynamic device in general - when pre-determined conditions are met.

In the second alternative, namely the passively actuated aerodynamic device, such as e.g. a passively bending Gurney flap, movable, e.g. bending or pivotable, components form a part of the aerodynamic device.

A drawback of actively activating aerodynamic devices as well as passively activated devices is that they generally have to be maintained and serviced during operation of the wind turbine. As wind turbines are often located at a site with harsh weather conditions, maintenance have to be carried out regularly. This is costly, in particular if the wind turbine is located at a remote or otherwise difficult to access site.

US 2015/0050154 A1 describes a ridge mounted or defined along a trailing edge of an airfoil for noise reduction. Sides of the ridge converge from respective suction and pressure sides of the trailing edge to a peak of the ridge pointing aft. The sides of the ridge may be concave. The ridge may be hollow or have a core of a sound-absorbing material. The sides of the ridge may be perforated for pressure equalization across the ridge. The ridge may be covered with bristles or be defined by the tips of bristles of varying length. The peak of the ridge and/or at least one corner of the ridge and/or of the trailing edge may be serrated.

WO 2014/064626 A2 describes an aerodynamic appendix for a wind turbine blade which is designed to fit to the inner portion and intermediate portion of the wind turbine blade, and has a trailing edge, a pressure side, a suction side, and at least one duct connecting the pressure side fluidically to the suction side.

EP 2 341 245 A2 describes a lift generating apparatus for a wind turbine rotor blade including a first sidewall and an opposing second sidewall coupled together at a leading edge and at a trailing edge. The lift generating apparatus includes at least one forward blade extension coupled to the rotor blade to define a first airflow channel between the forward blade extension and the rotor blade, and at least one aft blade extension coupled to the rotor blade to define a second airflow channel between the aft blade extension and the rotor blade.

Therefore, there exists the desire of providing a concept of reducing the lift of the rotor blade with reduced maintenance efforts compared to existing solutions.

This object is met by the rotor blade of the independent claim. Advantageous modifications and embodiments are disclosed in the dependant claims.

According to the invention there is provided a rotor blade of a wind turbine, wherein the rotor blade comprises a suction side, a pressure side, a trailing edge section with a trailing edge, and a leading edge section with a leading edge. Furthermore, the rotor blade comprises an air duct at a trailing edge section which provides a flow path from the pressure side to the suction side. The air duct comprises an inlet portion and an outlet portion. Furthermore, the air duct is configured such that at least a portion of the air flow from the leading edge section to the trailing edge section is permanently guided through the air duct. A spanwise extension of the inlet portion of the air duct increases from an upstream end of the inlet portion towards the trailing edge of the rotor blade.

A key aspect of the present invention is that by providing a specifically designed trailing edge section of the rotor blade, lift of the rotor blade is reduced from the overly high level to a desired level. In particular, lift is reduced at this (spanwise) section of the rotor blade where the rotor blade comprises the air duct. This has the advantage that the spanwisely varying lift coefficient of the rotor blade can be selectively manipulated according to the spanwise region where the air duct is provided.

Alternatively, the rotor blade may also comprise air ducts along the entire span of the rotor blade, i.e. reaching from the root section to the tip section of the rotor blade.

Advantageously, however, the air duct is arranged at a spanwise position of the rotor blade between 20% and 80% of the total length of the rotor blade, in particular between 30% and 70% of the total length of the rotor blade. The given spanwise range is also referred to as the mid-board section of the rotor blade. This section is typically concerned with an overly high, i.e. undesired lift under specific operational conditions of the wind turbine. Therefore, by providing the inventive air duct at this spanwise range, the maximum lift of the rotor blade is beneficially reduced.

Note that during operation of the wind turbine, i.e. during rotation of the rotor of the wind turbine, an air flow from the leading edge section to the trailing edge section of the rotor blade is present. One fraction of this airflow is flowing along the suction side of the rotor blade, while the other fraction of the airflow is flowing along the pressure side. At the trailing edge of the rotor blade, both airflow fractions meet.

A key aspect of the present invention is that at least a part of the fraction of the airflow which flows from the leading edge section to the trailing edge section along the pressure side of the rotor blade is deflected and is guided through the air duct. This has the effect that a part of the airflow along the pressure side of the rotor blade already meets the airflow along the suction side of the rotor blade at a different position, namely upstream of the trailing edge of the rotor blade. This has the technical effect that lift of the rotor blade in this section of the rotor blade is reduced. Note that the air duct is configured such that the airflow is permanently guided through the air duct during presence of an airflow flowing from the leading edge section to the trailing edge section along the pressure side. Unlike any prior art solution where moveable flaps or similar aerodynamic devices are provided, the inventive rotor blade does not present any moveable parts at the trailing edge section. In other words, the configuration of the air duct is substantially fixed in all operational modes of the wind turbine.

Compared to prior art solution, the inventive rotor blade has the advantage that service and maintenance efforts are considerably reduced. As the air duct is configured as a permanent and stiff part, it forms a part like any other component of the rotor blade and therefore does not need any special attention during the lifetime of the rotor blade.

In an embodiment of the invention, the air duct is a part of a flap which is composed as a separate piece with regard to the remaining trailing edge section of the rotor blade.

Although there is the option to integrate the provision of the air duct in the manufacturing process of the rotor blade as such, it may be beneficial to manufacture the rotor blade separately, and also manufacture the air duct separately as a part of a flap. Subsequently, both parts are joined and connected together. This has the advantage that the manufacturing process of the rotor blade does not need to be changed and also that the flap comprising the air duct can be manufactured more flexibly.

Another advantage of the inventive rotor blade is that it has the potential to also reduce the noise at the trailing edge section of the rotor blade. Noise which is generated at the trailing edge section during operation of the wind turbine, i.e. during rotation of the rotor blades, is generally undesired because of nuisance to the environment. Therefore any reduction of self generated noise is advantageous. It has been discerned by the inventors, that the proposed air duct not only has the potential of reducing the lift and the load of the rotor blade, but also reducing the self generated noise at the trailing edge section during operation. Therefore the described air duct is also suited to substitute or complement existing noise reducing features such as trailing edge serrations and the like at the trailing edge section of the rotor blade.

In another embodiment of the invention, the flap comprises an attachment portion for attaching the flap to the remaining trailing edge section of the rotor blade.

Such an attachment portion is favorably shaped correspondingly to the section of the remaining rotor blade where it is prepared to be attached to. The flap is favorably attached at the trailing edge section of the rotor blade.

In another embodiment of the invention, the flap comprises a pressure side portion which at least partially substitutes and extends the pressure side of the remaining trailing edge section of the rotor blade. Furthermore, the rotor blade comprises an angle between the attachment portion and the pressure side portion which is between 1 degree and 25 degree, in particular between 5 degree and 15 degree.

This angle between the attachment portion and the pressure side portion of the flap is also referred to as the ramp angle. The ramp angle needs to be optimized according to the design of the airfoil where the flap is arranged and prepared to be attached to. Typically, the curvature of the trailing edge section is relatively small at the pressure side of the rotor blade. Therefore, because the flap continues, i.e. extends the pressure side of the remaining trailing edge section of the rotor blade, a relatively small ramp angle is preferred.

In another embodiment of the invention, the flap is attached to the remaining trailing edge section of the rotor blade by an adhesive bond, such as a glue.

Other ways to connect and attach the flap to the remaining rotor blade such as bolting and screwing are also possible. However, an adhesive bond has been proven to be a reliable and effortless way and is also practiced for connecting other parts of the wind turbine together such as other aerodynamic devices, e.g. winglets, vortex generators or trailing edge serrations.

Advantageously, the spanwise extension of the air duct is between 1% and 200% of the chord length, in particular between 2% and 50% of the chord length of the rotor blade.

In other words, the spanwise extension of the air duct is relatively small. The absolute values depend on the absolute size of the rotor blade.

In another embodiment of the invention, the chordwise extension between the upstream end of the inlet portion and the downstream end of the outlet portion is between 2% and 50% of the chord length, in particular between 5% and 20% of the chord length of the rotor blade.

Note that according to the specific design and shape of the air duct, the inlet portion and/or the outlet portion may be inclined as seen in a cross sectional view perpendicular to the span of the rotor blade. Therefore, the given values of the chordwise extension of the air duct refers to the distance between the downstream end of the outlet portion and the upstream end of the inlet portion.

In another embodiment of the invention, the minimum height of the air duct is between 0.1% and 10% of the chord length of the rotor blade in direction perpendicular to the span and perpendicular to the chord, in particular the minimum height is between 0.5% and 5% of the chord length.

Note that the height of the air duct may vary along the chordwise direction. However, there can be defined a maximum height and a minimum height. The given range between 0.5% and 5% of the chord length refers to the minimum height of the air duct.

In another embodiment of the invention the upstream end of the outlet portion is arranged between 75% and 100% of the chord length, in particular between 85% and 100%.

In other words, the air duct is advantageously arranged in the trailing edge section or at least close to the trailing edge section of the rotor blade.

The spanwise extension of the inlet portion of the air duct increases from the upstream end of the inlet portion towards the trailing edge of the rotor blade.

In other words, the air duct opens up or diverges in direction of the airflow.

In another embodiment of the invention, the spanwise extension of the entire outlet portion of the air duct is substantially constant. This has the advantage of ease of manufacturing of the air duct.

Finally, the invention is also directed towards a wind turbine comprising at least one rotor blade as described above.

Embodiments of the invention are now described, by way of example only, by the accompanying drawings, of which:
- Figure 1: shows a rotor blade of a wind turbine in a top view;
- Figure 2: shows a cross sectional view of a first example of the rotor blade;

- Figure 3: shows a second example in a cross sectional view;
- Figure 4: shows a perspective view of another example of a flap with an air duct;
- Figure 5: shows another perspective view of the flap as illustrated in Figure 4;
- Figures 6 and 7: show perspective views of an embodiment of an inventive flap with an air duct; and
- Figure 8: shows a top view on the pressure side portion of the inventive flap as illustrated in Figures 6 and 7.

The illustration in the drawings is in schematic form. It is noted that in different figures, similar or identical elements may be provided with the same reference signs.

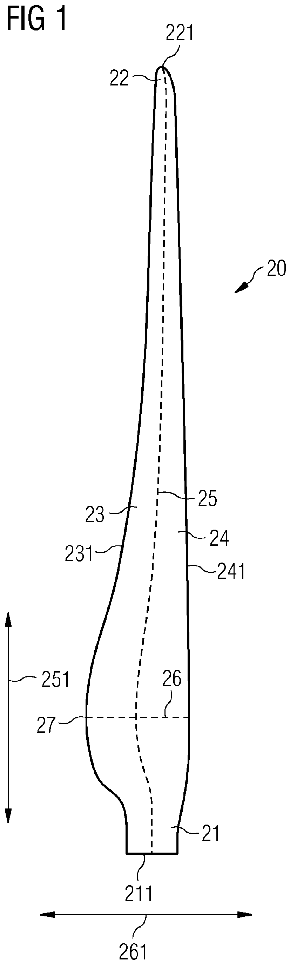

Figure 1 shows a rotor blade 20 of a wind turbine. The rotor blade 20 comprises a root section 21 with a root 211 and a tip section 22 with a tip 221. The root section 21 is connected with the tip section 22 via the span 25. The span 25 is defined as a straight line connecting both sections, the root section 21 and the tip section 22. It is basically a virtual line which, however, can e.g. coincide with a spar of the rotor blade. The span 25 also generally coincides with the pitch axis of the rotor blade.

Furthermore, the rotor blade 20 comprises a trailing edge section 23 with a trailing edge 231 and a leading edge section 24 with a leading edge 241.

Furthermore, chords 26 can be attributed to the rotor blade at each spanwise position. The chord with the maximum chord length is referred to as the chord which is located at the shoulder 27 of the rotor blade 20. The chord 26 and the span 25 define the chordwise direction 261 and the spanwise direction 251 of the rotor blade.

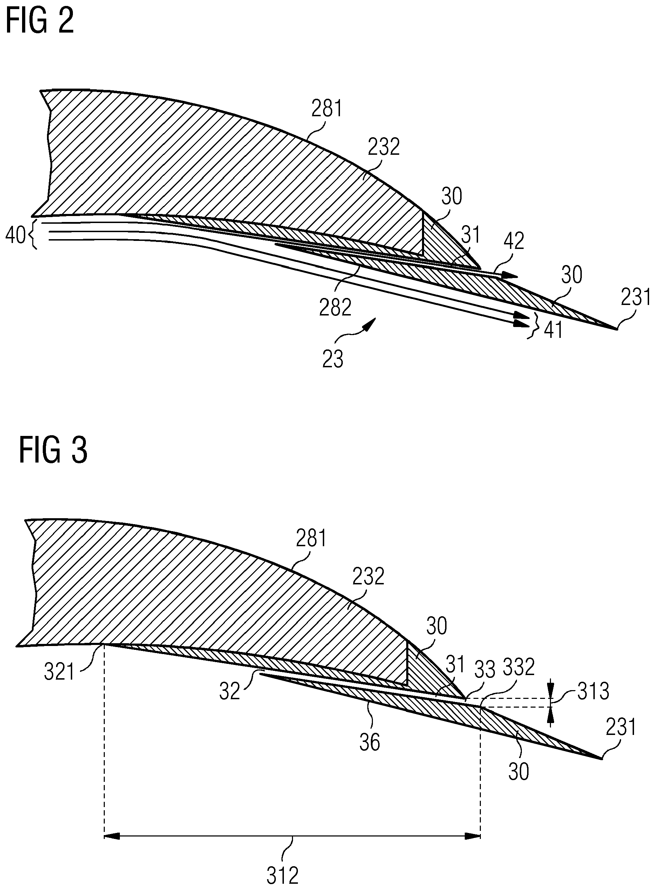

Figure 2 shows a first example of a rotor blade. Figure 2 shows a cross sectional view of a part of the rotor blade. In particular, it illustrates the trailing edge section 23 of the rotor blade. In this example, there exists the remaining rotor blade with the remaining trailing edge section 232 and a flap 30 which is attached to the remaining rotor blade at the remaining trailing edge section 232. Also note that a suction side 281 and a pressure side 282 can be attributed to the rotor blade in Figure 2.

Coming back to the flap 30, the flap 30 comprises a first portion which is attached to the remaining trailing edge section 232 and a second part which comprises the trailing edge 231 of the entire rotor blade. Both parts are divided or separated by a gap which is referred to as the air duct 31. This air duct 31 can also be referred to as an air channel. The air duct 31 has the technical effect that a part of the airflow 40 which is flowing from the leading edge section to the trailing edge section of the rotor blade at the pressure side 282 is deflected and diverted through the air duct 31.

In Figure 2, this portion of the airflow 40 which is deflected and guided through the air duct 31 is referenced by the reference numeral 42. In contrast, this portion of the airflow 40 which is un-deflected by the air duct 31 is referred to as the un-deflected portion 41 of the airflow. Note that the airflow, i.e. the un-deflected portion 41 of the airflow 40, is also slightly deflected by the mere presence of the flap 30, but it is not specifically deflected by the air duct 31. The presence and the provision of the air duct 31 leads to a reduction of the lift coefficient of the airfoil and to the reduction of noise that is generated at the trailing edge section of the rotor blade.

Figure 3 shows a similar view of a very similar flap 30 and focuses on the dimensions of the air duct 31. It can be seen that the chordwise extension of the air duct 31 needs to be measured from the upstream end 321 of the inlet portion 32 of the air duct 31 to the downstream end 322 of the outlet portion 33 of the air duct 31. This chordwise extension of the air duct 31 is referred to by the reference numeral 312.

The height of the air duct 31 is substantially uniform and constant in the example of Figure 3. The minimum height 313 is measured and determined by the length of the distance referred to by the reference numeral 313.

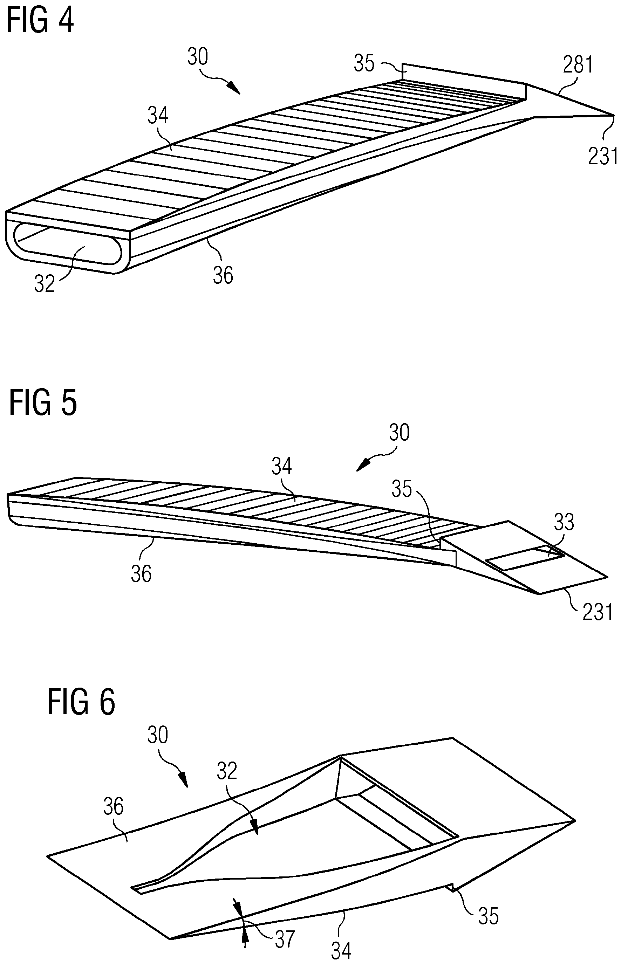

Another example is illustrated in Figures 4 and 5. Here, perspective views of a flap 30 comprising an air duct 31 are shown. The inlet portion 32 and the outlet portion 33 can be seen in Figure 4 and Figure 5, respectively. Also the attachment portion 34 and the pressure side portion 36 of the flap can be well discerned. In the embodiment as shown in Figures 4 and 5, the flap also comprises an alignment rim 35. This alignment rim is to be arranged at the trailing edge of the remaining trailing edge section of the rotor blade. The rim has the beneficial effect of facilitating alignment of the flap 30 during connection of the flap 30 with the remaining rotor blade. This alignment is even more facilitated by this alignment rim 35 if the flap has to be mounted and attached to an already existing rotor blade which is e.g. already mounted on a hub of a wind turbine.

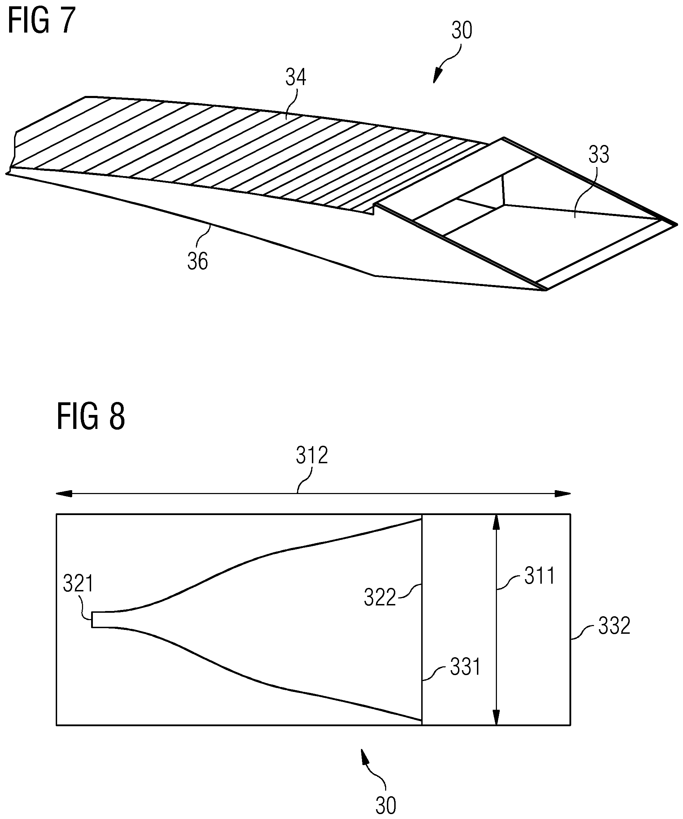

Figures 6 to 8 show an embodiment according to the invention of a flap 30 with an air duct 31. Figures 6 and 7 show perspective views focusing on the attachment portion 34 and the pressure side portion 36 of the flap 30. Figure 6 also shows the angle 37 between the attachment portion 34 and the pressure side portion 36. It can be seen, that the width of the air duct 31, i.e. the spanwise extension of the air duct 31, is increasing in the direction of the airflow. In other words, the side walls of the air duct 31 are diverting towards the trailing edge. By this measure, a particularly favorable flow guidance can be achieved.

Figure 8 illustrates some dimensions of the air duct 31 and the flap 30: It can be seen that the spanwise extension exemplarily amounts to a few centimeters, while the minimum height 313 of the air duct is one centimeter and the ramp angle 37 amounts to one degree. The chordwise extension of the flap 30 as illustrated in the example of Figures 6 to 8 amounts to 20 centimeters.

## Claims

1. Rotor blade (20) of a wind turbine,
wherein
- the rotor blade (20) comprises a suction side (281), a pressure side (282), a trailing edge section (23) with a trailing edge (231), and a leading edge section (24) with a leading edge (241),
- the rotor blade (20) comprises an air duct (31) at the trailing edge section (23) which provides a flow path from the pressure side (282) to the suction side (281),
- the air duct (31) comprises an inlet portion (32) and an outlet portion (33),
- the air duct (31) is configured such that at least a portion of the airflow (40) from the leading edge section (24) to the trailing edge section (23) is permanently guided through the air duct (31), **characterized in that** a spanwise extension (311) of the inlet portion (32) of the air duct (31) increases from an upstream end (321) of the inlet portion (32) towards the trailing edge (231) of the rotor blade (20).

2. Rotor blade (20) according to claim 1,
wherein the configuration of the air duct (31) is independent on the operational mode of the wind turbine.

3. Rotor blade (20) according to one of the preceding claims, wherein the air duct (31) is a part of a flap (30) which is composed as a separate piece with regard to the remaining trailing edge section (232) of the rotor blade (20).

4. Rotor blade (20) according to claim 3,
wherein the flap (30) comprises an attachment portion (34) for attaching the flap (30) to the remaining trailing edge section (232) of the rotor blade (20).

5. Rotor blade (20) according to claim 3 or 4,
wherein
- the flap (30) comprises a pressure side portion (36),
- the pressure side portion (36) at least partially substitutes and extends the pressure side (282) of the remaining trailing edge section (232) of the rotor blade (20), and
- the angle (37) between the attachment portion (34) and the pressure side portion (36) is between one degree and twenty-five degree, in particular between five degree and fifteen degree.

6. Rotor blade (20) according to one of claims 3 to 5,
wherein the flap (30) is attached to the remaining trailing edge section (232) of the rotor blade (20) by an adhesive bond.

7. Rotor blade (20) according to one of the preceding claims, wherein the spanwise extension (311) of the air duct (31) is between 1% and 200% of the chord length, in particular between 2% and 50% of the chord length.

8. Rotor blade (20) according to one of the preceding claims, wherein the chordwise extension (312) of the air duct (31) between the upstream end (321) of the inlet portion (32) and the downstream end (322) of the outlet portion (33) is between 2% and 50% of the chord length, in particular between 5% and 20% of the chord length.

9. Rotor blade (20) according to one of the preceding claims, wherein the minimum height (313) of the air duct (31) in direction perpendicular to the span (25) and perpendicular to the chord (26) is between 0.1% and 10% of the chord length, in particular between 0.5% and 5% of the chord length.

10. Rotor blade (20) according to one of the preceding claims,
wherein the upstream end (331) of the outlet portion (33) is arranged between 75% and 100% of the chord length, in particular between 85% and 100%.

11. Rotor blade (20) according to one of the claims 1 to 10, wherein the spanwise extension (311) of the entire outlet portion (33) of the air duct (31) is substantially constant.

12. Rotor blade (20) according to one of the preceding claims,
wherein the air duct (31) is arranged at a spanwise position of the rotor blade (20) between 20% and 80% of the total length of the rotor blade (20), in particular between 30% and 70% of the total length of the rotor blade (20).

## Patentansprüche

1. Rotorblatt (20) einer Windenergieanlage,
wobei
- das Rotorblatt (20) eine Saugseite (281), eine Druckseite (282), einen Hinterkantenabschnitt (23) mit einer Hinterkante (231) und einen Vorderkantenabschnitt (24) mit einer Vorderkante (241) umfasst,
- das Rotorblatt (20) einen Luftkanal (31) an dem Hinterkantenabschnitt (23) umfasst, der einen Strömungsweg von der Druckseite (282) zur Saugseite (281) bereitstellt,
- der Luftkanal (31) einen Einlassteil (32) und einen Auslassteil (33) umfasst,
- der Luftkanal (31) so konfiguriert ist, dass zumindest ein Teil des Luftstroms (40) vom Vorderkantenabschnitt (24) zum Hinterkantenabschnitt (23) stets durch den Luftkanal (31) geleitet wird, **dadurch gekennzeichnet, dass**
sich eine Ausdehnung (311) des Einlassteils (32) des Luftkanals (31) in Spannweitenrichtung von einem stromaufwärtigen Ende (321) des Einlassteils (32) zur Hinterkante (231) des Rotorblatts (20) hin vergrößert.

2. Rotorblatt (20) nach Anspruch 1,
wobei die Konfiguration des Luftkanals (31) vom Betriebsmodus der Windenergieanlage unabhängig ist.

3. Rotorblatt (20) nach einem der vorhergehenden Ansprüche, wobei der Luftkanal (31) Teil einer Klappe (30) ist, die in Bezug auf den Rest des Hinterkantenabschnitts (232) des Rotorblatts (20) als separates Teilstück ausgebildet ist.

4. Rotorblatt (20) nach Anspruch 3,
wobei die Klappe (30) einen Befestigungsteil (34) zum Befestigen der Klappe (30) am Rest des Hinterkantenabschnitts (232) des Rotorblatts (20) umfasst.

5. Rotorblatt (20) nach Anspruch 3 oder 4,
wobei
- die Klappe (30) einen Druckseitenteil (36) umfasst,
- der Druckseitenteil (36) die Druckseite (282) vom Rest des Hinterkantenabschnitts (232) des Rotorblatts (20) zumindest teilweise ersetzt und verlängert und
- der Winkel (37) zwischen dem Befestigungsteil (34) und dem Druckseitenteil (36) zwischen ein und fünfundzwanzig Grad, insbesondere zwischen fünf und fünfzehn Grad beträgt.

6. Rotorblatt (20) nach einem der Ansprüche 3 bis 5,
wobei die Klappe (30) über eine Klebverbindung am Rest des Hinterkantenabschnitts (232) des Rotorblatts (20) angebracht ist.

7. Rotorblatt (20) nach einem der vorhergehenden Ansprüche, wobei die Ausdehnung (311) des Luftkanals (31) in Spannweitenrichtung zwischen 1% und 200% der Profilsehnenlänge, insbesondere zwischen 2% und 50% der Profilsehnenlänge beträgt.

8. Rotorblatt (20) nach einem der vorhergehenden Ansprüche, wobei die Ausdehnung (312) des Luftkanals (31) in Profilsehnenrichtung zwischen dem stromaufwärtigen Ende (321) des Einlassteils (32) und dem stromabwärtigen Ende (322) des Auslassteils (33) zwischen 2% und 50% der Profilsehnenlänge, insbesondere zwischen 5% und 20% der Profilsehnenlänge beträgt.

9. Rotorblatt (20) nach einem der vorhergehenden Ansprüche, wobei die Mindesthöhe (313) des Luftkanals (31) in einer zur Spannweite (25) und zur Profilsehne (26) senkrechten Richtung zwischen 0,1% und 10% der Profilsehnenlänge, insbesondere zwischen 0,5% und 5% der Profilsehnenlänge beträgt.

10. Rotorblatt (20) nach einem der vorhergehenden Ansprüche, wobei das stromaufwärtige Ende (331) des Auslassteils (33) zwischen 75% und 100%, insbesondere zwischen 85% und 100% der Profilsehnenlänge angeordnet ist.

11. Rotorblatt (20) nach einem der Ansprüche 1 bis 10, wobei die Ausdehnung (311) des gesamten Auslassteils (33) des Luftkanals (31) in Spannweitenrichtung im Wesentlichen konstant ist.

12. Rotorblatt (20) nach einem der vorhergehenden Ansprüche, wobei der Luftkanal (31) in einer Position in Spannweitenrichtung des Rotorblatts (20) angeordnet ist, die zwischen 20% und 80% der Gesamtlänge des Rotorblatts (20), insbesondere zwischen 30% und 70% der Gesamtlänge des Rotorblatts (20) liegt.

## Revendications

1. Pale de rotor (20) d'une turbine éolienne, dans laquelle :
- la pale de rotor (20) comprend un côté d'aspiration (281), un côté de pression (282), une section de bord de fuite (23) dotée d'un bord de fuite (231) et une section de bord d'attaque (24) dotée d'un bord d'attaque (241),
- la pale de rotor (20) comprend un conduit d'air (31) au niveau de la section de bord de fuite (23) qui fournit une trajectoire d'écoulement du côté de pression (282) au côté d'aspiration (281),
- le conduit d'air (31) comprend une partie d'entrée (32) et une partie de sortie (33),
- le conduit d'air (31) est configuré de telle sorte qu'au moins une partie du flux d'air (40) de la section de bord d'attaque (24) à la section de bord de fuite (23) est guidée en permanence à travers le conduit d'air (31), **caractérisé en ce que** :
- une extension dans le sens de l'envergure (311) de la partie d'entrée (32) du conduit d'air (31) augmente à partir d'une extrémité amont (321) de la partie d'entrée (32) vers le bord de fuite (231) de la pale de rotor (20).

2. Pale de rotor (20) selon la revendication 1, dans laquelle la configuration du conduit d'air (31) est indépendante du mode de fonctionnement de la turbine éolienne.

3. Pale de rotor (20) selon l'une des revendications précédentes, dans laquelle le conduit d'air (31) fait partie d'un volet (30) qui est composé d'une pièce séparée par rapport à la section de bord de fuite restante (232) de la pale de rotor (20).

4. Pale de rotor (20) selon la revendication 3, dans laquelle le volet (30) comprend une partie de fixation (34) permettant de fixer le volet (30) à la section de bord de fuite restante (232) de la pale de rotor (20).

5. Pale de rotor (20) selon la revendication 3 ou 4, dans laquelle :
- le volet (30) comprend une partie latérale de pression (36) ,
- la partie latérale de pression (36) remplace et étend au moins partiellement le côté de pression (282) de la section de bord de fuite restante (232) de la pale de rotor (20), et
- l'angle (37) entre la partie de fixation (34) et la partie latérale de pression (36) se trouve entre un degré et vingt-cinq degrés, en particulier entre cinq degrés et quinze degrés.

6. Pale de rotor (20) selon l'une des revendications 3 à 5, dans laquelle le volet (30) est fixé à la section de bord de fuite restante (232) de la pale de rotor (20) grâce à un lien adhésif.

7. Pale de rotor (20) selon l'une des revendications précédentes, dans laquelle l'extension dans le sens de l'envergure (311) du conduit d'air (31) se situe entre 1 % et 200 % de la longueur de cordage, en particulier entre 2 % et 50 % de la longueur de cordage.

8. Pale de rotor (20) selon l'une des revendications précédentes, dans laquelle l'extension dans le sens de la corde (312) du conduit d'air (31) entre l'extrémité amont (321) de la partie d'entrée (32) et l'extrémité aval (322) de la partie de sortie (33) se situe entre 2 % et 50 % de la longueur de cordage, en particulier entre 5 % et 20 % de la longueur de cordage.

9. Pale de rotor (20) selon l'une des revendications précédentes, dans laquelle la hauteur minimum (313) du conduit d'air (31) dans une direction perpendiculaire à l'étendue (25) et perpendiculaire à la corde (26) se situe entre 0,1 % et 10 % de la longueur de cordage, en particulier entre 0,5 % et 5 % de la longueur de cordage.

10. Pale de rotor (20) selon l'une des revendications précédentes, dans laquelle l'extrémité amont (331) de la partie de sortie (33) est disposée entre 75 % et 100 % de la longueur de cordage, en particulier entre 85 % et 100 %.

11. Pale de rotor (20) selon l'une des revendications 1 à 10, dans laquelle l'extension dans le sens de l'envergure (311) de toute la partie de sortie (33) du conduit d'air (31) est sensiblement constante.

12. Pale de rotor (20) selon l'une des revendications précédentes, dans laquelle le conduit d'air (31) est disposé à une position dans le sens de l'envergure de la pale de rotor (20) entre 20 % et 80 % de la longueur totale de la pale de rotor (20), en particulier entre 30 % et 70 % de la longueur totale de la pale de rotor (20).
